# EUROPÄISCHE PATENTSCHRIFT

(11) **EP 2 663 460 B1**
(45) Veröffentlichungstag und Bekanntmachung des Hinweises auf die Patenterteilung: **01.03.2017**
(21) Anmeldenummer: 12704652.2
(22) Anmeldetag: 04.01.2012
(51) Int. Cl.: B60J 1/02, B60J 1/06, F41H 7/00

(54) **PANZERGLASSCHEIBE UND ZUGEHÖRIGE, DURCHSCHUSSHEMMENDE VORRICHTUNG**
BULLET-PROOF GLASS PANE AND ASSOCIATED BULLET-RESISTANT DEVICE
VITRE PARE-BALLES ET DISPOSITIF PARE-BALLES ASSOCIÉ

(30) Priorität: 12.01.2011 DE 202011001371 U
(43) Veröffentlichungstag der Anmeldung: 20.11.2013
(73) Patentinhaber: ISOCLIMA S.p.A., 35042 Este (IT)
(72) Erfinder: ENGL, Andreas, 80689 München (DE)
(74) Vertreter: Seitz, Ralf Hans Frank
(86) Internationale Anmeldenummer: PCT/DE2012/000004
(87) Internationale Veröffentlichungsnummer: WO 2012/095098

(56) Entgegenhaltungen:
- EP-A1- 2 434 249
- EP-A2- 1 010 963
- DE-A1- 4 142 416
- DE-A1- 4 415 879
- DE-A1- 10 043 793
- DE-A1- 10 244 368
- DE-A1- 19 745 248
- DE-A1- 19 918 526
- DE-A1-102010 020 560

## Beschreibung

Die vorliegende Erfindung betrifft eine Panzerglasscheibe gemäss Anspruch 1 und eine Vorrichtung gemäss Anspruch 7.

DE 44 15 879 A1 beschreibt eine aus Panzerglas bestehende Fensterscheibe, die jeweils in den Türen eines Sicherheits-Personenwagens vorgesehen ist und in einem Türfensterrahmen höhenverlagerbar geführt ist. Diese Fensterscheibe hat an einem oberen Umfangsabschnitt und an den beiden seitlichen Umfangsabschnitten eine Randstufe, auf die stirnseitig ein im Querschnitt L-förmiges Panzerelement aufgeklebt ist, das teilweise die Randstufe abdeckt. Weiterhin ist auch ein Stahlelement am Türrahmen vorgesehen, das einen kurzen Schenkel des L-förmigen Panzerelements teilweise überdeckt. DE 41 42 416 A1 beschreibt eine aus Panzerglas bestehende Fensterscheibe mit einem randseitig angeordneten, L-förmig gewinkelten Panzerelement, das sich ausgehend von einer abgestuften Stirnseite der Fensterscheibe teilweise auf einer Innenseite der Fensterscheibe erstreckt.

DE 197 45 248 A1 enthält eine Panzerglasscheibe, insbesondere zur Verwendung in einem Kraftfahrzeug, mit mehreren Glasscheiben und Verbundzwischenschichten aus Polyurethan, wobei eine äußere Glasscheibe die anderen Glasscheiben mit einem Vorsprung randseitig überragt und eine streifenförmige Metalleinlage in der Verlängerung einer Scheibe des Scheibenpakets angeordnet ist und somit das Scheibenpaket nur teilweise stirnseitig abdeckt.

EP 1 010 963 A2 beschreibt eine Panzerglasscheibe mit mehreren schichtweise angeordneten Glasscheiben und dazwischen liegenden Verbundschichten, wobei eine Außenscheibe zusammen mit einer streifenförmigen Metallarmierung die anderen Glasscheiben am Außenrand der Panzerglasscheibe überragt und sich die Metallarmierung in eine stirnseitige Vertiefung zwischen zwei Glasscheiben erstreckt und somit das innere Scheibenpaket bzw. den ballistischen Block nur teilweise abdeckt. Hierzu ähnlich aufgebaute Panzerglasscheiben für ein gepanzertes Fahrzeug sind auch in DE 102 44 368 A1 und DE 199 18 526 A1 beschrieben.

DE 100 43 793 A1 beschreibt eine gepanzerte Scheibe für Sicherheitskraftfahrzeuge mit mehreren aufeinander geschichteten Glasscheiben, von denen eine äußere Glasscheibe die anderen Glasscheiben stirnseitig überragt, und mit einem T-förmigen Profilelement, das stirnseitig am Rand der gepanzerten Scheibe vorgesehen ist und mit einem Abschnitt in eine stirnseitige Vertiefung eingreift.

Eine Panzerglasscheibe ist auch in EP 1 004 433 B1 beschrieben. Diese Panzerglasscheibe wird als Windschutzscheibe eines Autos verwendet und ist als Verbundglasscheibe mit mehreren Glasscheiben und dazwischenliegenden Verbundschichten aus Kunststoff, z.B. Polyurethan, aufgebaut. Am Außenrand oder Umfang der bekannten Panzerglasscheibe befindet sich ein Vorsprung, der Teil einer Außenscheibe aus Panzerglas ist und der in einen Rahmen oder einen Falz einer Karosserie des Kraftfahrzeugs eingreift oder daran angebracht ist. An diese Außenscheibe schließt ein ballistischer Block aus einer Glasscheibe oder mehreren Glasscheiben mit entsprechend vielen dazwischen angeordneten Verbundschichten an. Der ballistische Block ist gegenüber der Außenscheibe der Panzerglasscheibe zum Innenraum des Kraftfahrzeugs hin abgestuft, der Vorsprung steht also über den ballistischen Block hinaus. Bei einem Beschuss von außen könnte es nun passieren, dass eine abgefeuerte Kugel derart ungünstig schräg auf die Panzerglasscheibe im Randbereich auftrifft, dass sie die Panzerglasscheibe durchdringt und somit in das Fahrzeuginnere mit potentiellen Verletzungsfolgen für die Fahrzeuginsassen gelangen kann.

Aufgabe der vorliegenden Erfindung ist es deshalb, eine Panzerglasscheibe anzugeben, die auch im Außenrandbereich die geforderte Durchschusshemmung einhält.

Diese Aufgabe wird durch die Panzerglasscheibe von Anspruch 1 gelöst. Demnach hat die Panzerglasscheibe der Erfindung für ein Kraftfahrzeug einen ballistischen Block, der mehrere in einem Verbund schichtweise flächig miteinander verbundene Scheiben aus Glas, Keramik oder Kunststoff und dazwischenliegende Verbundschichten aus Kunststoff aufweist, wobei die Scheiben miteinander durch die Verbundschichten über entsprechende Oberflächen der Scheiben in einem geschichteten Verbund verbunden sind. Der ballistische Block der Panzerglasscheibe der Erfindung hat eine Stirnseite, die von außen nach innen an einem Außenrand der Panzerglasscheibe abgestuft ist, wobei die Stirnseite mindestens zwei parallel und versetzt zueinander sich erstreckende, ebene Stirnflächen hat, wobei entsprechend den Stirnflächen mindestens zwei voneinander getrennte, durchschusshemmende Streifen aus Metall oder ballistischem Stahl vorgesehen sind, die jeweils einen im wesentlichen rechteckigen Querschnitt haben und die die Stirnflächen des ballistischen Blocks bündig abdecken.

Die Panzerglasscheibe der Erfindung hat den erheblichen Vorteil, dass sie durch den durchschusshemmenden Streifen an einer Umfangsstirnseite des ballistischen Blocks sogar einem Beschuss in einem ungünstigen schrägen Winkel auf die Außenseite der Panzerglasscheibe in deren Außenrandbereich oder Umfangsbereich standhält und somit die geforderte Durchschusshemmung bereitstellt. Zudem verhindert der durchschusshemmende Streifen der Panzerglasscheibe der Erfindung auch ein Absplittern von Glas im Randbereich der Panzerglasscheibe in Folge eines Beschusses oder reduziert diese Absplitterung doch erheblich. Dies hat wiederum zur Folge, dass einer Einsplitterung von Glas im Beschussfall in das Fahrzeuginnere, z.B. in den Fahrgastraum oder das Fahrerhaus, vermieden wird. Somit wird durch die Erfindung die Sicherheit der Fahrzeuginsassen insgesamt verbessert.

Die Panzerglasscheibe der Erfindung kann als am Fahrzeug fixierte Verbundsicherheitsscheibe, z.B. als Windschutzscheibe, oder als bewegliche, versenkbare oder hochfahrbare Seitenscheibe eines Fahrzeugs ausgebildet sein.

Der durchschusshemmende Streifen kann als Voll- oder Teilrahmen wie z.B. als dreiseitiger Rahmenstreifen oder als Randverstärkung aus Stahl ausgelegt sein, der dann auch nur an einem Teil des Umfangs der Panzerglasscheibe vorgesehen ist. Der Streifen oder die Stahlleiste kann aus Einzelteilen zusammengesetzt sein, die in Reihe aneinander anschließend am Umfang der Panzerglasscheibe bzw. auf einer Stirnseite des ballistischen Blocks angeordnet sind, um den gesamten Streifen auszubilden.

Der ballistische Block der Panzerglasscheibe der Erfindung kann an eine zusätzliche Außenscheibe der Panzerglasscheibe anschließen, wenn ein Vorsprung am Rand der Panzerglasscheibe durch diese Außenscheibe ausgebildet ist. Ist dagegen keine Außenscheibe mit Vorsprung vorhanden, besteht die Panzerglasscheibe folglich nur aus dem ballistischen Block, den der durchschusshemmende Streifen umfangsmäßig oder stirnseitig vollständig abdeckt.

Der ballistische Block ist an seiner Stirnseite von außen nach innen abgestuft, wodurch ein platzsparender und kompakter Aufbau der Panzerglasscheibe der Erfindung und auch ein platzsparender Aufbau bei eingebauter und montierter Panzerglasscheibe am Fahrzeug ermöglicht wird.

Die äußere Scheibe der Panzerglasscheibe kann mindestens eine äußere Glasscheibe, Keramikscheibe oder Kunststoffscheibe sein, die mit dem ballistischen Block beschussseitig verbunden ist und über den ballistischen Block selbst an dem Außenrand oder Umfang der Panzerglasscheibe hinaus steht. Folglich kann der Rand der Panzerglasscheibe der Erfindung derart ausgebildet sein, dass der Vorsprung zusammen mit dem Streifen auf dem ballistischen Block randseitig gesehen bündig ist.

Der Vorsprung der Panzerglasscheibe der Erfindung kann z.B. in Richtung zum Fahrzeuginneren hin abgestuft sein, also eine Stufe oder mehrere Stufen haben, um eine platzsparende Anbringung der Scheibe am Fahrzeug zu ermöglichen.

Der ballistische Block ist am Außenrand der Panzerglasscheibe zum Fahrzeuginneren hin mit einer oder mehreren Stufen abgestuft, was mindestens zwei oder mehr parallele und versetzt zueinander sich erstreckende Stirnflächen der Stirnseite des ballistischen Blocks ergibt. Folglich sind auch entsprechend den Stirnflächen zwei und mehr voneinander getrennte durchschusshemmende Streifen mit jeweils im Wesentlichen rechteckigem Querschnitt vorgesehen, die dann die einzelnen Stirnflächen und somit auch die gesamte Stirnseite des ballistischen Blocks bündig abdecken. Durch die Abstufung des ballistischen Blocks kann eine weitere Reduzierung des Platzbedarfs der Panzerglasscheibe der Erfindung erreicht werden, was insbesondere Vorteile bei einer Schwerpanzerung eines Fahrzeugs mit entsprechend sehr dicken Panzerglasscheiben mit hohem Gewicht hat.

Die durchschusshemmenden Streifen des abgestuften ballistischen Blocks können gleich dick oder unterschiedlich dick in einer Richtung senkrecht auf die Panzerglasscheibe gesehen und/oder in einer Richtung zum Außenrand der Panzerglasscheibe hin gesehen sein, um entsprechend den gegebenen Bedingungen beim Einbau in eine Karosserie die Durchschusshemmungseigenschaften der Panzerglasscheibe zu verbessern oder das Einsplitterrisiko bei randseitigem Beschuss weiter zu reduzieren.

Der durchschusshemmende Streifen bzw. die durchschusshemmenden Streifen werden bevorzugt auf dem ballistischen Block aufgeklebt, z.B. mit einer Polyurethanschicht, um einen Verbund mit dem ballistischen Block mit langer Lebensdauer sicherstellen zu können.

Die Erfindung betrifft auch eine zugehörige, durchschusshemmende Vorrichtung oder Sicherheitsvorrichtung in einem Kraftfahrzeug gemäß dem Anspruch 7. Demnach hat die Vorrichtung der Erfindung für ein Kraftfahrzeug eine Panzerglasscheibe, welche einen ballistischen Block aufweist, der mehrere in einem Verbund schichtweise flächig miteinander verbundene Scheiben aus Glas, Keramik oder Kunststoff und dazwischenliegende Verbundschichten aus Kunststoff hat, wobei mindestens ein durchschusshemmender Streifen aus Metall oder ballistischem Stahl vorgesehen ist, wobei der Streifen einen im wesentlichen rechteckigen Querschnitt hat und den ballistischen Block der Panzerglasscheibe randseitig bündig abdeckt, und eine durchschusshemmende Panzerungseinrichtung, die im Inneren des Kraftfahrzeugs benachbart zu der Panzerglasscheibe angeordnet ist und eine Abstufung hat, welche die Panzerglasscheibe in einem Bereich des Außenrands der Panzerglasscheibe überlappt.

Bevorzugt kann die Panzerungseinrichtung die Panzerglasscheibe abstützen, was insbesondere bei einer sehr schweren Panzerglasscheibe von Vorteil ist und eine zusätzliche Befestigungsmöglichkeit zusätzlich zu der Befestigung oder Anbringung der Panzerglasscheibe an einem Rahmen oder einem Falz der Fahrzeugkarosserie ermöglicht.

Der ballistische Block der Panzerglasscheibe kann stirnseitig eine Abstufung haben und die Panzerungseinrichtung kann auch eine Abstufung haben, die der Abstufung des ballistischen Blocks derart entspricht, dass sie in die Abstufung des ballistischen Blocks der Panzerglasscheibe eingreift. Hierdurch kann ein kompakter und platzsparender Aufbau der Sicherheitsvorrichtung der Erfindung erreicht werden.

Die Panzerglasscheibe kann allgemein in oder an einem Rahmen oder Falz einer Fahrzeugkarosserie angebracht sein bzw. in diesen eingreifen, wobei der Rahmen oder Falz die Panzerglasscheibe abstützt. Insbesondere kann die Panzerglasscheibe einen Vorsprung an ihrem Außenrand haben, der in oder an einem Stufenprofil einer Fahrzeugkarosserie befestigt oder festgeklebt ist.

Die durschusshemmende Vorrichtung kann eine Panzerglasscheibe mit einer Außenscheibe haben, die mindestens eine Glasscheibe, Keramikscheibe oder Kunststoffscheibe aufweist und die mit dem ballistischen Block beschussseitig verbunden ist bzw. mit diesem einen Verbund bildet und über den ballistischen Block und den darauf angebrachten Streifen an dem Außenrand der Panzerglasscheibe hinaus steht, um einen Vorsprung der Panzerglasscheibe auszubilden. Die Panzerglasscheibe kann dann mit ihrem Vorsprung an oder in einem Rahmen oder Falz der Karosserie eines Kraftfahrzeugs angebracht sein oder darin gehalten sein.

Der Vorsprung der Panzerglasscheibe kann stirnseitig zum Fahrzeuginneren hin eine Abstufung mit einer Stufe oder mehreren Stufen haben und auch das Stufenprofil der Fahrzeugkarosserie kann eine Abstufung zu einer Fahrzeugaußenseite hin mit einer oder mehreren Stufen haben, die der Abstufung des Vorsprungs der Panzerglasscheibe derart entspricht, dass sie in die Abstufung des Vorsprungs eingreift bzw. an diese angepasst ist, um die Sicherheit gegen Beschuss am Rand weiter verbessern zu können und zudem einen kompakten und platzsparenden Aufbau der Sicherheitsvorrichtung erreichen zu können. Eine Höhe und/oder Breite der Stufen des Vorsprungs der Panzerglasscheibe und der
Stufen des Profilrahmens der Karosserie kann dabei gleich oder unterschiedlich zueinander in der Form sein.

Weitere vorteilhafte Weiterbildungen der vorliegenden Erfindung sind den Unteransprüchen zu entnehmen.

Weitere Vorteile, vorteilhafte Weiterbildungen und Verwendungen der Erfindung sind der nachfolgenden Beschreibung von beispielhaften und bevorzugten Ausführungsformen der Erfindung in Verbindung mit den Zeichnungen zu entnehmen. Es zeigen:
- Fig. 1: eine schematische und teilweise Querschnittsansicht einer bevorzugten, durchschusshemmenden Vorrichtung der Erfindung mit einer Panzerglasscheibe; und
- Fig. 2: eine schematische und teilweise Querschnittsansicht einer Panzerglasscheibe gemäß einer bevorzugten Ausführungsform der Erfindung in einer weiteren durchschusshemmenden Vorrichtung der Erfindung.

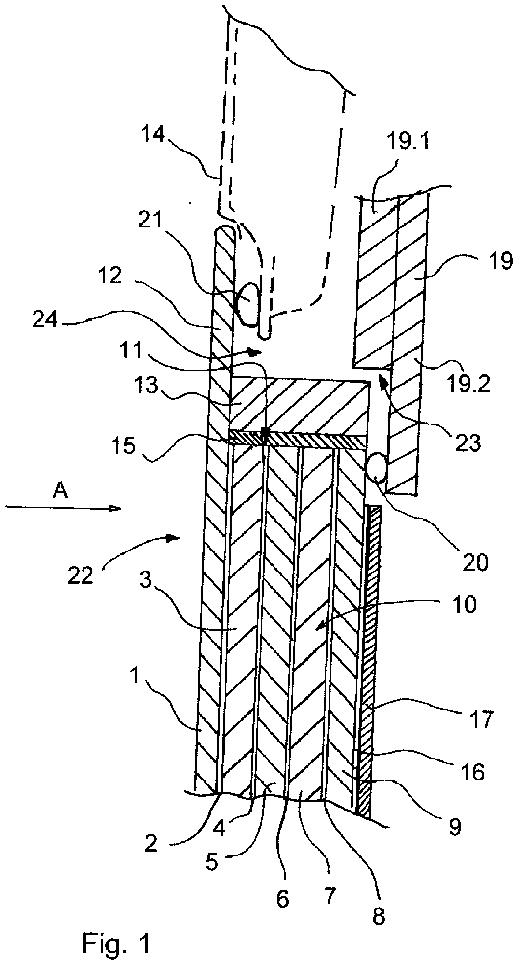

Die Fig. 1 zeigt eine Teilansicht einer Panzerglasscheibe 22 als Verbundsicherheitsscheibe im Querschnitt mit einem mit gestrichelter Linie angedeuteten Fahrzeugrahmen 14. Nachfolgend wird die in Fig. 1 gezeigte Panzerglasscheibe im Detail unter beispielhafter Bezugnahme auf die Verwendung der Panzerglasscheibe als Windschutzscheibe eines Kraftfahrzeugs erläutert.

Die transparente Panzerglasscheibe 22 von Fig. 1 hat fünf sandwichartige bzw. laminatartig angeordnete Glasscheiben 1, 3, 5, 7 und 9, wobei die innere Glasscheibe 9 fahrzeuginnenseitig, die äußere Glasscheibe 1 fahrzeugaußenseitig, also beschussseitig, und die Glasscheiben 3, 5 und 7 zwischen der äußeren Glasscheibe 1 oder Außenscheibe und der inneren Glasscheibe 9 angeordnet ist. Die Außenseite und damit die Beschussseite des Fahrzeugs ist durch den Pfeil A in Fig. 1 verdeutlicht, der auf die äußere Glasscheibe 1 zeigt. Zwischen der äußeren Glasscheibe 1 und der nachfolgenden Glasscheibe 3 erstreckt sich eine Verbundschicht 2 aus Kunststoff, z.B. aus Polyurethan (PU) oder Polyvinylbutyral (PVB), die einen Verbund zwischen der äußeren Glasscheibe 1 und der Glasscheibe 3 ausbildet. Die Verbundschicht bzw. Verbundfolie, z.B. Polyurethanfolie, ist umriss- und flächendeckungsgleich zur Glasscheibe 3.

Zwischen der Glasscheibe 3 und der weiter nach innen folgenden Glasscheibe 5 ist eine weitere Verbundschicht 4, z.B. eine weitere Polyurethanschicht, oder eine Verbundschicht aus Polyvinylbutyral (PVB) ausgebildet, die wiederum einen festen Verbund zwischen der Glasscheibe 3 und der nachfolgenden Glasscheibe 5 herstellt. Die Verbundschicht 4 ist flächenmäßig deckungsgleich zu den anstoßenden Seitenflächen der Glasscheiben 3 und 5.

Zwischen der Glasscheibe 5 und der weiter nach innen folgenden Glasscheibe 7 ist wieder eine Verbundschicht 6, z.B. eine weitere Polyurethanschicht oder eine Verbundschicht aus Polyvinylbutyral (PVB), ausgebildet, die wiederum einen festen Verbund zwischen den Glasscheiben 5 und 7 herstellt. Die Verbundschicht 6 ist wiederum flächenmäßig deckungsgleich zu den anstoßenden Seitenflächen der Glasscheiben 5 und 7.

Zwischen der Glasscheibe 7 und der nachfolgenden inneren Glasscheibe 9 ist eine Verbundschicht 8, z.B. eine weitere Polyurethanschicht oder eine Verbundschicht aus Polyvinylbutyral (PVB), ausgebildet, die wiederum einen festen Verbund zwischen den Glasscheiben 7 und 9 herstellt. Die Verbundschicht 8 ist wiederum flächenmäßig deckungsgleich zu den anstoßenden Seitenflächen der Glasscheiben 7 und 9. Die Glasscheiben 3, 5, 7 und 9 bilden zusammen mit den Verbundschichten 2, 4, 6 und 8 einen ballistischen Block 10, der eine randseitige, ebene und bündige Stirnseite 11 hat.

Die äußere Glasscheibe 1 ragt über die anderen Glasscheiben 3, 5, 7 und 9 und den ballistischen Block 10 am Rand oder Umfang der Panzerglasscheibe der Erfindung gemäß Fig. 1 in einem Vorsprung 12 vor, wodurch stirnseitig bzw. randseitig an der Panzerglasscheibe eine Abstufung 24 oder Stufe zu den anderen Glasscheiben 3 bis 9 bzw. zu dem ballistischem Block 10 hin ausgebildet ist.

Auf der Stirnseite 11 des ballistischen Blocks 10 ist ein durchschusshemmender Streifen 13 mit einem rechteckigen Querschnitt angebracht, der mit einer Verbundschicht 15, z.B. einer Polyurethanschicht oder Klebeschicht, auf der ebenen Stirnseite 11 in einem festen Verbund befestigt ist und den ballistischen Block 10 an der ebenen Stirnseite bündig abdeckt. Der durchschusshemmende Streifen 13 besteht aus Stahl, insbesondere einem ballistischen Stahl, der die Panzerglasscheibe rahmenförmig umschließt. Der durchschusshemmende Streifen 13 kann aus mehreren, in Reihe aufeinanderfolgenden Streifenteilen zusammengesetzt sein, die an den Stoßstellen bevorzugt lose ineinander greifen, um eine gewisse gegenseitige Beweglichkeit zu erreichen, um Abmessungsänderungen des Streifens 13 aufgrund von Temperaturänderungen auffangen zu können, damit eine Beschädigung der Panzerglasscheibe verhindert wird. Der Stahlstreifen 13 kann zum Schutz gegen Rosten mittels einer kathodischen Tauch- und Einbrennlackierung behandelt sein.

Bei einer beispielhaften Panzerglasscheibe 22 der Erfindung gemäß Fig. 1 betragen die Dicken oder Stärken der Glasscheiben 1, 3, 5, 7 und 9 zwischen etwa 2 mm bis 6 mm, die Dicken der Verbundschichten 2, 4, 6 und 8 zwischen etwa 0,5 bis 1,5 mm, die Dicke des rechteckigen Streifens 13 aus Stahl liegt in einem Bereich zwischen etwa 2 mm und 8 mm und die Dicke der Verbundschicht 15 liegt in einem Bereich zwischen 0,5 mm und 2 mm.

Auf der innenseitigen Fläche der inneren Glasscheibe 9 ist eine Schichtenfolge mit einer Polyurethanschicht 16 und einer Polycarbonatscheibe 17 vorgesehen, die kürzer als die innere Glasscheibe 9 sind, d.h. die innere Glasscheibe 9 steht über die Schichten 16 und 17 hinaus. Die Dicke dieser zusätzlichen Polyurethanschicht 16 beträgt etwa 1,9 mm und die Dicke der Polycarbonatscheibe 17 beträgt etwa 2,5 mm.

Fig. 1 zeigt auch schematisch eine Teilansicht einer ersten Ausführungsform der durchschusshemmenden Vorrichtung oder Sicherheitsvorrichtung der Erfindung, die die Panzerglasscheibe 22 und eine Panzerungseinrichtung 19 aufweist, die innenseitig an der Fahrzeugkarosserie angebracht ist und den Außenbereich der Panzerglasscheibe 22 überlappt, um die erforderliche Durchschusshemmung sicherzustellen.

Die Panzerungseinrichtung 19 ist aus zwei verbundenen Platten 19.1 und 19.2 oder Verstärkungen, insbesondere aus ballistischem Stahl, aufgebaut, wobei die Platte 19.1 nahe an den Streifen 13 der Panzerglasscheibe 22 heranreicht und den Vorsprung 12 überlappt und die weiter innen angeordnete Platte 19.2 nahe an die Innenseite der inneren Glasscheibe 9 heranreicht und überlappt. Die Panzerungseinrichtung 19 hat somit eine Abstufung 23 mit einer Stufe, die einer Abstufung der Panzerglasscheibe 22 zwischen dem Vorsprung 12 und dem Streifen 13 entspricht oder formmäßig derart angepasst ist, dass eine enge Überlappung und ein kompakter Aufbau der Sicherheitsvorrichtung erreicht wird.

Die Panzerglasscheibe 22 ist mit ihrem Vorsprung mittels einer Kleberaupe 21 an einem abgestuften Rahmen 14 der Karosserie des Fahrzeugs befestigt und stützt sich dagegen ab. Zudem ist die Panzerglasscheibe 22 mittels einer weiteren Kleberaupe 20 auch mit der inneren Platte 19.2 der Panzerungseinrichtung 19 verklebt und wird von dieser zusätzlich abgestützt.

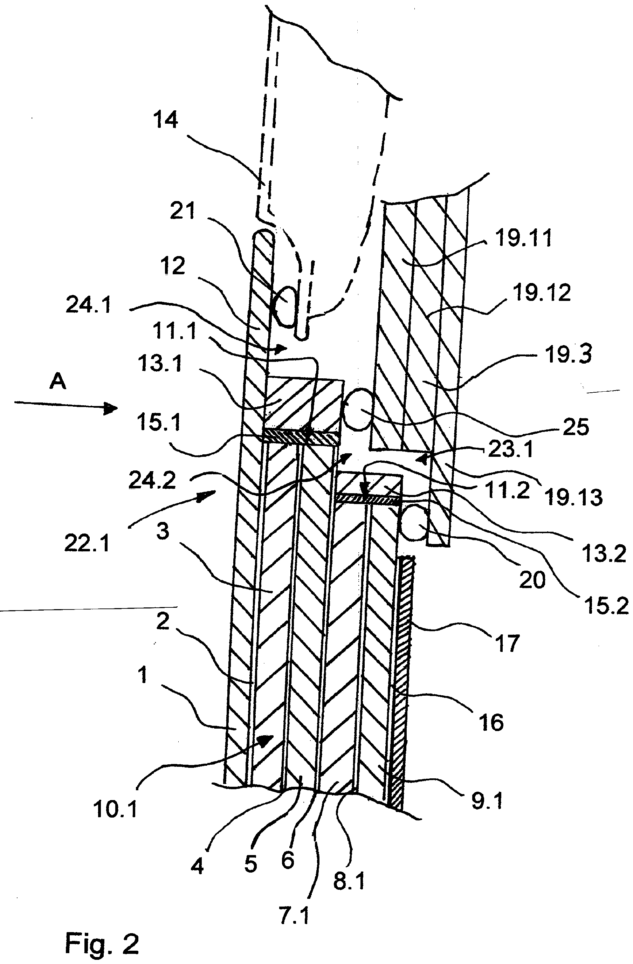

Fig. 2 zeigt eine Teilansicht einer Ausführungsform der Panzerglasscheibe 22.1 der vorliegenden Erfindung als Verbundsicherheitsscheibe im Querschnitt mit einem mit gestrichelter Linie angedeuteten, abgestuften Fahrzeugrahmen 14 oder Falz. Nachfolgend wird die in Fig. 2 gezeigte Ausführungsform der Erfindung im Detail unter beispielhafter Bezugnahme auf die Verwendung der erfindungsgemäßen Panzerglasscheibe 22.1 als Windschutzscheibe eines Kraftfahrzeugs erläutert.

Die Panzerglasscheibe 22.1 von Fig. 2 hat fünf sandwichartige bzw. laminatartig angeordnete Glasscheiben 1, 3, 5, 7.1 und 9.1, wobei die innere Glasscheibe 9.1 fahrzeuginnenseitig, die äußere Glasscheibe 1 fahrzeugaußenseitig, also beschussseitig, und die Glasscheiben 3, 5 und 7.1 zwischen der äußeren Glasscheibe 1 oder Außenscheibe und der inneren Glasscheibe 9.1 angeordnet ist. Die Außenseite und damit die Beschussseite des Fahrzeugs ist durch den Pfeil A in Fig. 2 verdeutlicht, der auf die äußere Glasscheibe 1 zeigt. Zwischen der äußeren Glasscheibe 1 und der nachfolgenden Glasscheibe 3 erstreckt sich eine Verbundschicht 2 aus Kunststoff, z.B. aus Polyurethan (PU) oder Polyvinylbutyral (PVB), die einen Verbund zwischen der äußeren Glasscheibe 1 und der Glasscheibe 3 ausbildet. Die Verbundschicht bzw. Verbundfolie, z.B. Polyurethanfolie, ist umriss- und flächendeckungsgleich zur Glasscheibe 3.

Zwischen der Glasscheibe 3 und der weiter nach innen folgenden Glasscheibe 5 ist eine weitere Verbundschicht 4, z.B. eine weitere Polyurethanschicht, oder eine Verbundschicht aus Polyvinylbutyral (PVB) ausgebildet, die wiederum einen festen Verbund zwischen der Glasscheibe 3 und der nachfolgenden Glasscheibe 5 herstellt. Die Verbundschicht 4 ist flächenmäßig deckungsgleich zu den anstoßenden Seitenflächen der Glasscheiben 3 und 5.

Zwischen der Glasscheibe 5 und der weiter nach innen folgenden Glasscheibe 7.1 ist wieder eine Verbundschicht 6, z.B. eine weitere Polyurethanschicht oder eine Verbundschicht aus Polyvinylbutyral (PVB), ausgebildet, die einen festen Verbund zwischen den Glasscheiben 5 und 7.1 herstellt. Die Verbundschicht 6 ist wiederum flächenmäßig deckungsgleich zu den anstoßenden Seitenflächen der Glasscheiben 5 und 7.1.

Zwischen der Glasscheibe 7.1 und der nachfolgenden inneren Glasscheibe 9.1 ist eine Verbundschicht 8.1, z.B. eine weitere Polyurethanschicht oder eine Verbundschicht aus Polyvinylbutyral (PVB), ausgebildet, die wiederum einen festen Verbund zwischen den Glasscheiben 7.1 und 9.1 herstellt. Die Verbundschicht 8.1 ist wiederum flächenmäßig deckungsgleich zu den anstoßenden Seitenflächen der Glasscheiben 7.1 und 9.1. Die Glasscheiben 3, 5, 7.1 und 9.1 bilden zusammen mit den Verbundschichten 2, 4, 6 und 8.1 einen ballistischen Block 10.1, der parallele und versetzt zueinander sich erstreckende, ebene Stirnflächen 11.1 und 11.2 hat, die zusammen eine randseitige Stirnseite des abgestuften ballistischen Blocks 10.1 bilden.

Die äußere Glasscheibe 1 ragt über die anderen Glasscheiben 3, 5, 7.1 und 9.1 und den ballistischen Block 10.1 am Rand oder Umfang der Panzerglasscheibe 22.1 der Erfindung gemäß Fig. 2 mit einem Vorsprung 12 hinaus, wodurch stirnseitig bzw. randseitig an der Panzerglasscheibe 22.1 eine Abstufung 24.1 oder Stufe zu den bündigen und gleichgroßen Glasscheiben 3 und 5 des ballistischen Blocks 10 hin ausgebildet ist. Die Glasscheiben 3 und 5 ragen über die Glasscheiben 7.1 und 9.1 des ballistischen Blocks 10.1 am Rand oder Umfang der Panzerglasscheibe 22.1 hinaus, wodurch eine weitere Stufe 24.2 von den bündigen Glasscheiben 3 und 5 zu den bündigen und gleichgroßen Glasscheiben 7.1 und 9.1 des ballistischen Blocks 10.1 hin ausgebildet ist.

Auf der ebenen Stirnfläche 11.1 des ballistischen Blocks 10.1 ist seitlich bündig zu den Glasscheiben 3 und 5 ein erster durchschusshemmender Streifen 13.1 mit einem rechteckigen Querschnitt angebracht, der mit einer Verbundschicht 15.1, z.B. einer Polyurethanschicht oder Klebeschicht, auf der Stirnfläche 11.1 in einem festen Verbund befestigt ist. Der durchschusshemmende Streifen 13.1 besteht aus Stahl, insbesondere einem ballistischen Stahl, der die Panzerglasscheibe rahmenförmig umschließt. Der durchschusshemmende Streifen 13.1 kann aus mehreren in Reihe aufeinanderfolgender Teile zusammengesetzt sein, die an den Stoßstellen bevorzugt lose ineinander greifen, um eine gewisse gegenseitige Beweglichkeit zu erreichen, um Abmessungsänderungen des Streifens 13.1 aufgrund von Temperaturänderungen auffangen zu können, damit eine Beschädigung der Panzerglasscheibe 22.1 verhindert wird. Auf der Stirnfläche 11.2 des ballistischen Blocks 10.1 ist seitlich bündig zu den Glasscheiben 7.1 und 9.1 ein zweiter durchschusshemmender Streifen 13.2 mit einem rechteckigen Querschnitt angebracht, der mit einer weiteren Verbundschicht 15.2, z.B. einer Polyurethanschicht oder Klebeschicht, auf der Stirnfläche 11.2 in einem festen Verbund befestigt ist. Der durchschusshemmende Streifen 13.2 besteht aus Stahl, insbesondere einem ballistischen Stahl, der die Panzerglasscheibe rahmenförmig umschließt. Der durchschusshemmende Streifen 13.2 kann wiederum aus mehreren in Reihe aufeinanderfolgender Teile zusammengesetzt sein, die an den Stoßstellen bevorzugt lose ineinander greifen, um eine gegenseitige Beweglichkeit zu erreichen, damit Abmessungsänderungen des Streifens 13.2 aufgrund von Temperaturänderungen zum Vermeiden einer Beschädigung der Panzerglasscheibe 22.1 verhindert werden können.

Auf der innenseitigen Fläche der inneren Glasscheibe 9.1 ist eine Schichtenfolge mit einer Polyurethanschicht 16 und einer Polycarbonatscheibe 17 vorgesehen, die kürzer als die innere Glasscheibe 9.1 ist, d.h. die innere Glasscheibe 9.1 steht über die Schichten 16 und 17 hinaus. Ein Endbereich der Schichten 16 und 17 kann mit einer Schutzfolie aus Kunststoff abgedeckt sein. Eine Abstufung 24.1 oder Stufe der Panzerglasscheibe 22.1 ist zwischen dem Vorsprung 12 und dem Streifen 13.1 vorgesehen und eine Abstufung 24.2 oder Stufe ist zwischen dem Streifen 13.1 und dem Streifen 13.2 vorgesehen.

Fig. 2 zeigt schematisch auch eine Teilansicht einer weiteren Ausführungsform der durchschusshemmenden Vorrichtung oder Sicherheitsvorrichtung der Erfindung, die die Panzerglasscheibe 22.1 und eine Panzerungseinrichtung 19.3 aufweist, die innenseitig an der Fahrzeugkarosserie angebracht ist und den Außenbereich der Panzerglasscheibe 22.1 sicher überlappt, um die erforderliche Durchschusshemmung sicherstellen zu können.

Die Panzerungseinrichtung 19.3 ist hier aus drei miteinander verbundenen Platten 19.11, 19.12 und 19.13 oder Verstärkungen, insbesondere aus ballistischem Stahl, aufgebaut, wobei die bündigen Platten 19.11 und 19.12 nahe an den Streifen 13.1 der Panzerglasscheibe 22.1 heranreichen und den Vorsprung 12 überlappen und wobei die innen angeordnete Platte 19.13 nahe an die Innenseite der inneren Glasscheibe 9.1 heranreicht und diese überlappt. Die Panzerungseinrichtung 19.3 hat somit eine Abstufung 23.1, die einer Abstufung 24.2 der Panzerglasscheibe 22.1 zwischen dem Streifen 13.1 und dem Streifen 13.2 entspricht oder formmäßig derart angepasst ist, dass eine enge Überlappung und ein kompakter Aufbau der Sicherheitsvorrichtung erreicht wird.

Die Panzerglasscheibe 22.1 ist mit ihrem Vorsprung 12 mittels einer Kleberaupe 21 an einem abgestuften Rahmen 14 der Karosserie des Fahrzeugs befestigt und stützt sich dagegen ab. Zudem ist die Panzerglasscheibe 22.1 mittels einer weiteren Kleberaupe 20 auch mit der inneren Platte 19.13 der Panzerungseinrichtung 19.3 verklebt und wird von dieser zusätzlich abgestützt. Zudem ist noch eine dritte Kleberaupe 25 vorgesehen, mittels der der Streifen 13.1 an der äußeren Platte 19.11 verklebt ist.

## Patentansprüche

1. Panzerglasscheibe, insbesondere zur Verwendung in einem Kraftfahrzeug, mit einem ballistischen Block (10.1), der mehrere in einem Verbund schichtweise flächig miteinander verbundene Scheiben aus Glas (3, 5, 7, 9; 7.1, 9.1), Keramik oder Kunststoff und dazwischenliegende Verbundschichten (2, 4, 6, 8.1) aus Kunststoff aufweist, und mit mindestens einem durchschusshemmenden Streifen (13.1, 13.2), der aus Metall, insbesondere ballistischem Stahl, besteht und den ballistischen Block (10.1) der Panzerglasscheibe (22.1) randseitig abdeckt, **dadurch gekennzeichnet,**
**dass** der ballistische Block (10.1) an seiner Stirnseite von außen nach innen abgestuft ist, was mindestens zwei oder mehr parallel und versetzt zueinander sich erstreckende, ebene Stirnflächen (11.1, 11.2) der Stirnseite des ballistischen Blocks (10.1) ergibt, und dass entsprechend den Stirnflächen (11.1, 11.2) zwei und mehr voneinander getrennte Streifen (13.1, 13.2) vorgesehen sind, die jeweils einen im Wesentlichen rechteckigen Querschnitt haben und die die Stirnflächen (11.1, 11.2) des ballistischen Blocks (10.1) bündig abdecken.

2. Panzerglasscheibe nach Anspruch 1, **gekennzeichnet durch** mindestens eine äußere Glasscheibe, Keramikscheibe oder Kunststoffscheibe, die mit dem ballistischen Block beschussseitig verbunden ist und über den ballistischen Block an dem Außenrand oder Umfang der Panzerglasscheibe hinaus steht.

3. Panzerglasscheibe nach Anspruch 1 oder Anspruch 2, **gekennzeichnet durch** eine Glasscheibe (1), Keramikscheibe oder Kunststoffscheibe, die mit dem ballistischen Block (10.1) beschussseitig verbunden ist und über den ballistischen Block und die Streifen (13.1, 13.2) an dem Außenrand der Panzerglasscheibe (22.1) hinaus steht, um einen Vorsprung (12) der Panzerglasscheibe zur Anbringung der Panzerglasscheibe an oder in einem Rahmen (14) oder Falz der Karosserie eines Kraftfahrzeugs auszubilden.

4. Panzerglasscheibe nach Anspruch 3, **dadurch gekennzeichnet, dass** der Vorsprung der Panzerglasscheibe abgestuft ist.

5. Panzerglasscheibe nach einem der Ansprüche 1 bis 4, **dadurch gekennzeichnet, dass** die Streifen (13.1, 13.2) gleich oder unterschiedlich dick in einer Richtung senkrecht auf die Panzerglasscheibe (22.1) gesehen und/oder in einer Richtung zum Außenrand der Panzerglasscheibe hin gesehen sind.

6. Panzerglasscheibe nach einem der vorhergehenden Ansprüche, **dadurch gekennzeichnet, dass** die Streifen (13.1, 13.2) der Randverstärkung auf dem ballistischen Block (10.1) aufgeklebt sind.

7. Vorrichtung für ein Kraftfahrzeug, **gekennzeichnet durch** eine Panzerglasscheibe (22.1) nach einem der Ansprüche 1 bis 6 und **durch** eine durchschusshemmende Panzerungseinrichtung (19.3), die im Inneren des Kraftfahrzeugs benachbart zu der Panzerglasscheibe (22.1) angeordnet ist und eine Abstufung (23.1) hat, welche die Panzerglasscheibe in einem Bereich des Außenrands der Panzerglasscheibe überlappt.

8. Vorrichtung nach Anspruch 7, **dadurch gekennzeichnet, dass** die Panzerungseinrichtung (19.3) die Panzerglasscheibe (22.1) abstützt.

9. Vorrichtung nach Anspruch 7 oder Anspruch 8, **dadurch gekennzeichnet, dass** der ballistische Block (10.1) der Panzerglasscheibe (22.1) stirnseitig eine Abstufung hat und dass die Panzerungseinrichtung (19.3) eine Abstufung (23.1) hat, die der Abstufung des ballistischen Blocks (10.1) derart entspricht, dass sie in die Abstufung des ballistischen Blocks (10.1) der Panzerglasscheibe (22.1) eingreift und überlappt.

10. Vorrichtung nach einem der Ansprüche 7 bis 9, **dadurch gekennzeichnet, dass** die Panzerglasscheibe (22.1) in oder an einem Rahmen (14) oder Falz einer Fahrzeugkarosserie angebracht ist und dass der Rahmen oder Falz die Panzerglasscheibe abstützt.

11. Vorrichtung nach Anspruch 10, **dadurch gekennzeichnet, dass** die Panzerglasscheibe (22.1) einen Vorsprung (12) an ihrem Außenrand hat, der in oder an einem Stufenprofil einer Fahrzeugkarosserie befestigt oder festgeklebt ist.

12. Vorrichtung nach Anspruch 11, **dadurch gekennzeichnet, dass** der Vorsprung der Panzerglasscheibe stirnseitig eine Abstufung hat und dass das Stufenprofil der Fahrzeugkarosserie eine Abstufung hat, die der Abstufung des Vorsprungs der Panzerglasscheibe derart entspricht, dass sie in die Abstufung des Vorsprungs eingreift.

## Claims

1. Bullet-proof glass pane, in particular for use in a motor vehicle, comprising a ballistic block (10.1) having a plurality of panes of glass, ceramic or plastic material (3, 5, 7, 9; 7.1, 9.1) bonded to each other over their surfaces in a layered composite, and interposed bonding interlayers of plastic material (2, 4, 6, 8.1), and at least one bullet-resistant strip (13.1, 13.2) made of metal, in particular of ballistic steel, and covering the ballistic block (10.1) of the bullet-proof glass pane (22.1) at its peripheral edge, **characterized**
**in that** the ballistic block (10.1) has a stepped configuration on its edge face from the outside to the inside which results in at least two or more planar edge surfaces (11.1, 11.2) of the edge face of the ballistic block (10.1) extending in parallel and offset with respect to each other, and
**in that**, in correspondence with the edge surfaces (11.1, 11.2), two or more separate strips (13.1, 13.2) are provided each having a substantially rectangular cross-section and covering the edge surfaces (11.1, 11.2) of the ballistic block (10.1) in a flush manner.

2. Bullet-proof glass pane according to claim 1, **characterized by** at least one outer glass pane, ceramic pane or plastic pane bonded to the ballistic block on the side of impact and protruding from the ballistic block at the outer periphery or circumference of the bullet-proof glass pane.

3. Apparatus according to claim 1 or claim 2, **characterized by** a glass pane (1), ceramic pane or plastic pane bonded to the ballistic block (10.1) on the side of impact and protruding from the ballistic block and form the strip (13.1, 13.2) on the edge of the bullet-proof glass pane (22.1) to form a protrusion (12) of the bullet-proof glass pane for mounting the bullet-proof glass pane on or in a frame (14) or rabbet of the body of an automotive vehicle.

4. Bullet-proof glass pane according to claim 3, **characterized in that** the protrusion of the bullet-proof glass pane has a stepped configuration.

5. Bullet-proof glass pane according to one of the claims 1 to 4, **characterized in that** the strips (13.1, 13.2) have the same or different thicknesses as viewed in a direction normal to the bullet-proof glass pane (22.1) and/or as viewed in a direction toward the outer periphery of the bullet-proof glass pane.

6. The bullet-proof glass pane according to any one of the preceding claims, **characterized in that** the strips (13.1, 13.2) of the edge reinforcement are bonded to the ballistic block (10.1).

7. Apparatus for a automotive vehicle, **characterized by** a bullet-proof glass pane (22.1) according to any one of claims 1 to 6, and a bullet-resistant armoring device (19.3) arranged on the inside of the motor vehicle adjacent to the bullet-proof glass pane (22.1) and comprising a stepped configuration (23.1) overlapping the bullet-proof glass pane in an area of the outer periphery of the bullet-proof glass pane.

8. Apparatus according to claim 7, **characterized in that** the armoring device (19.3) supports the bullet-proof glass pane (22.1).

9. Apparatus according to claim 7 or claim 8, **characterized in that** the ballistic block (10.1) of the bullet-proof glass pane (22.1) has a stepped configuration at its edge face and **in that** the armoring device (19.3) has a stepped configuration (23.1) corresponding to the stepped configuration of the ballistic block (10.1) in such a manner that it engages and overlaps the stepped configuration of the ballistic block (10.1) of the bullet-proof glass pane (22.1).

10. Apparatus according to any one of claims 7 to 9, **characterized in that** the bullet-proof glass pane (22.1) is mounted in or on a frame (14) or rabbet of a vehicle body and **in that** the frame or rabbet supports the bullet-proof glass pane.

11. Apparatus according to claim 10, **characterized in that** the bullet-proof glass pane (22.1) has a protrusion (12) at its outer periphery, which is attached or bonded to a stepped profile of a vehicle body.

12. Apparatus according to claim 11, **characterized in that** the protrusion of the bullet-proof glass pane has a stepped configuration at its edge face and **in that** the stepped profile of the vehicle body has a stepped configuration corresponding to the stepped configuration of the protrusion of the bullet-proof glass pane in such a manner that it engages the stepped configuration of the protrusion.

## Revendications

1. Vitre blindée, en particulier pour son utilisation dans un véhicule à moteur, comprenant un bloc balistique (10.1) qui présente plusieurs vitres en verre (3, 5, 7, 9 ; 7.1, 9.1), en céramique ou en matière synthétique reliées les unes aux autres sur toute leur surface par couches pour obtenir un stratifié et des couches stratifiées intercalées (2, 4, 6, 8.1) en matière synthétique, et comprenant au moins une bande empêchant les perforations (13.1, 13.2) qui est constituée de métal, en particulier d'acier balistique, et qui recouvre le bloc balistique (10.1) de la vitre blindée (22.1) sur ses bords, **caractérisée en ce que** le bloc balistique (10.1) possède, sur son côté frontal, un gradin s'étendant depuis l'extérieur vers l'intérieur, ce qui donne au moins deux surfaces frontales planes (11.1, 11.2) s'étendant en parallèle et en décalage réciproque, sur le côté frontal du bloc balistique (10.1), et **en ce qu'**on prévoit, de manière correspondante aux surfaces frontales (11.1, 11.2) deux bandes et plus (13.1, 13.2) séparées l'une de l'autre, qui possèdent respectivement une section transversale essentiellement rectangulaire et qui recouvrent à fleur les surfaces frontales (11.1, 11.2) du bloc balistique (10.1).

2. Vitre blindée selon la revendication 1, **caractérisée par** au moins une vitre externe en verre, une vitre externe en céramique ou une vitre externe en matière synthétique qui est reliée au bloc balistique du côté d'où proviennent les tirs et qui fait saillie au-delà du bloc balistique contre le bord externe ou contre la périphérie de la vitre blindée.

3. Vitre blindée selon la revendication 1 ou la revendication 2, **caractérisée par** une vitre en verre (1), une vitre en céramique ou une vitre en matière synthétique qui est reliée au bloc balistique (10.1) du côté d'où proviennent les tirs et qui fait saillie au-delà du bloc balistique et des bandes (13.1, 13.2) contre le bord externe de la vitre blindée (22.1), pour réaliser une saillie (12) de la vitre blindée à des fins d'application de la vitre blindée contre ou dans un encadrement (14) ou une rainure de la carrosserie d'un véhicule à moteur.

4. Vitre blindée selon la revendication 3, **caractérisée en ce que** la saillie de la vitre blindée est échelonnée.

5. Vitre blindée selon l'une quelconque des revendications 1 à 4, **caractérisée en ce que** les bandes (13.1, 13.2) possèdent une épaisseur identique ou différente lorsqu'on regarde dans une direction perpendiculaire à la vitre blindée (22.1) et/ou lorsqu'on regarde dans une direction qui s'étend vers le bord externe de la vitre blindée.

6. Vitre blindée selon l'une quelconque des revendications précédentes, **caractérisée en ce que** les bandes (13.1, 13.2) du renforcement marginal sont collées au bloc balistique (10.1).

7. Dispositif pour un véhicule à moteur, **caractérisé par** une vitre blindée (22.1) selon l'une quelconque des revendications 1 à 6 et par un mécanisme de blindage (19.3) empêchant les perforations qui est disposé à l'intérieur du véhicule à moteur en position adjacente à la vitre blindée (22.1) et qui possède un gradin (23.1) qui chevauche la vitre blindée dans une zone du bord externe de la vitre blindée.

8. Dispositif selon la revendication 7, **caractérisé en ce que** le mécanisme de blindage (19.3) supporte la vitre blindée (22.1).

9. Dispositif selon la revendication 7 ou la revendication 8, **caractérisé en ce que** le bloc balistique (10.1) de la vitre blindée (22.1) possède, sur son côté frontal, un gradin et **en ce que** le mécanisme de blindage (19.3) possède un gradin (23.1) qui correspond au gradin du bloc balistique (10.1) d'une manière telle qu'il vient s'insérer dans le gradin du bloc balistique (10.1) de la vitre blindée (22.1) et qu'il le chevauche.

10. Dispositif selon l'une quelconque des revendications 7 à 9, **caractérisé en ce que** la vitre blindée (22.1) est montée dans ou contre un encadrement (14) ou une rainure d'une carrosserie de véhicule et **en ce que** l'encadrement (14) ou la rainure supporte la vitre blindée.

11. Dispositif selon la revendication 10, **caractérisé en ce que** la vitre blindée (22.1) possède une saillie (12) contre son bord externe, qui est fixée ou collée dans ou contre un profil échelonné d'une carrosserie de véhicule.

12. Dispositif selon la revendication 11, **caractérisé en ce que** la saillie de la vitre blindée possède, du côté frontal, un gradin et **en ce que** le profil échelonné de la carrosserie du véhicule possède un gradin, qui correspond au gradin de la saillie de la vitre blindée d'une manière telle qu'il vient s'insérer dans le gradin de la saillie.
